# EUROPÄISCHE PATENTSCHRIFT

(11) **EP 1 477 281 B1**
(45) Veröffentlichungstag und Bekanntmachung des Hinweises auf die Patenterteilung: **21.12.2011**
(21) Anmeldenummer: 04006660.7
(22) Anmeldetag: 19.03.2004
(51) Int. Cl.: B23Q 3/12, B25D 17/08

(54) **Handwerkzeugmaschine**
Hand tool
Outil à main

(30) Priorität: 15.05.2003 DE 10321869
(43) Veröffentlichungstag der Anmeldung: 17.11.2004
(73) Patentinhaber: ROBERT BOSCH GMBH, 70442 Stuttgart (DE)
(72) Erfinder: Frauhammer, Karl, 70771 Leinfelden-Echterdingen (DE); Schnerring, Heinz, 72135 Dettenhausen (DE); Braun, Willy, 72149 Neustetten (DE); Kuhnle, Axel, 71691 Freiberg A.N. (DE)

(56) Entgegenhaltungen:
- EP-A- 0 556 713
- EP-A- 0 684 109
- WO-A-02/24403
- DE-A1- 10 127 103
- DE-A1- 19 621 610

## Beschreibung

### Stand der Technik

Die Erfindung geht aus von einer Handwerkzeugmaschine, insbesondere einen Bohr- oder Schlaghammer, nach dem Oberbegriff des Anspruchs 1.

Eine derartige Handwerkzeugmaschine ist aus der WO 02/24403 A1 bekannt.

Bei einer bekannten Handwerkzeugmaschine (DE 28 20 128 A1) ist der Werkzeughalter einstückig mit einer Drehhülse verbunden, die drehbar auf dem Führungsrohr gelagert ist und mittels eines Drehantriebs in Rotation versetzt werden kann. Das Führungsrohr ist feststehend im Maschinengehäuse angeordnet und nimmt einen von einem Taumelantrieb in eine hin- und hergehende Axialbewegung versetzten Antriebskolben eines sog. Schlagwerks und einen Schlagkolben oder Döpper axial verschieblich auf. Zwischen dem Antriebskolben und dem Döpper ist ein Luftpolster eingeschlossen. Ist das Schlagwerk eingeschaltet, so beaufschlagt der Antriebskolben über das Luftpolster den Döpper, und dieser gibt seine Schlagenergie direkt auf das in dem Werkzeugshalter axial verschieblich und drehfest eingespannte Werkzeug ab. Ist zusätzlich der Drehantrieb eingeschaltet, so wird der Werkzeughalter in Rotation versetzt und durch diesen das Werkzeug auch gedreht.

Ein bekannter, wechselbarer Werkzeughalter für eine Handwerkzeugmaschine, insbesondere für einen Bohr- und/oder Schlaghammer, (DE 32 05 063 C2) ist mittels einer Verriegelungsvorrichtung direkt auf einer eine Dreh- und Hubbewegung ausführenden Antriebsspindel axial begrenzt verschieblich und drehfest festgelegt. Hierzu weist der Werkzeughalter einen auf die Antriebsspindel aufschiebbaren Endbereich auf, der über ein Keilwellenprofil in Drehmitnahme mit der Antriebsspindel steht. In diesem Endbereich ist mindestens eine Radialbohrung angeordnet, in der eine Kugel als Verriegelungskörper radial verschieblich angeordnet ist. Die Kugel greift in eine in der Antriebsspindel ausgebildete umlaufende Längsnut ein und verriegelt den Werkzeughalter mit Axialspiel gegen Abziehen in Achsrichtung. Eine dem Einspannen des Werkzeugs in dem Werkzeugshalter dienende Schiebehülse übergreift die Kugel und blockiert deren radiale Verschiebung. Wird die Schiebehülse manuell mit Kraft zum vorderen Ende hin verschoben, so gibt sie die mindestens eine Kugel frei und der Werkzeughalter kann bei verschoben gehaltener Schiebehülse vom Führungsrohr abgezogen werden.

Bei einer bekannten Handwerkzeugmaschine mit einem drehbar im Maschinengehäuse gelagerten Führungsrohr und einem auf das Führungsrohr auf dessen aus dem Maschinengehäuse vorstehenden Endbereich aufsetzbaren, wechselbaren Werkzeughalter (Boschhammer Typ Nr. 0611 249 700) weist der das Führungsrohr übergreifende Endabschnitt des Werkzeughalters vier um 90° Drehwinkel gegeneinander versetzt angeordnete Radialbohrungen auf, in denen jeweils eine einen Verriegelungskörper darstellende Kugel radial verschieblich einliegt und gegen Herausfallen aus der Radialbohrung gesichert ist. In Verriegelungsposition des Werkzeughalters liegen die Kugeln in Mulden ein, die um gleiche Drehwinkel versetzt in das Führungsrohr eingearbeitet sind. Eine drehverschieblich gehaltene Schiebehülse übergreift mit einem radial nach innen vorspringenden Ringsteg die Kugeln und verhindert dadurch jegliche Radialverschiebung der Kugel. Erst wenn die Schiebehülse durch eine Dreh-/Schiebebewegung in Richtung Maschinengehäuse nach hinten manuell verbracht wird, gibt der Ringsteg die Kugeln frei, und der Werkzeughalter kann bei verschoben gehaltener Schiebehülse von dem Führungsrohr abgenommen werden.

### Vorteile der Erfindung

Die erfindungsgemäße Handwerkzeugmaschine mit den Merkmalen des Anspruchs 1 hat den Vorteil, dass der Wechsel, d. h. die Montage und Demontage des Werkzeughalters, auch Wechselfutter genannt, mittels Einhandbedienung möglich ist. Der Bediener hält mit der Führungshand die Maschine, und mit der anderen Hand kann er den Werkzeughalter von der Maschine abnehmen oder an die Maschine ansetzen. Das Ansetzen erfolgt durch einfaches Aufschieben des Werkzeughalters auf das Führungsrohr, wobei bei Erreichen der Verriegelungsposition die Verriegelungsvorrichtung automatisch aktiviert wird und den Werkzeughalter drehfest und axial unverschieblich am Führungsrohr festlegt. Zum Abnehmen des Werkzeughalters von der Maschine muss die Verrieglungsvorrichtung zuvor einhändig gelöst werden, wodurch der Werkzeughalter automatisch in die unverriegelte Montageposition auf dem Führungsrohr verschoben wird, in der er am Führungsrohr gegen Abfallen gesichert ist. Nun kann der Bediener die Schiebehülse loslassen und mit derselben Hand den Werkzeughalter durch manuelles Greifen entweder abziehen oder erneut verriegeln, je nachdem in welche Richtung er den Werkzeughalter verschiebt. Ein erneutes Lösen der Verriegelungsvorrichtung oder ein Halten der Verriegelungsvorrichtung in ihrer Deaktivierungsstellung ist nicht erforderlich. Selbst wenn der Bedienende den in Montageposition befindlichen Werkzeughalter weder abzieht noch erneut verriegelt, ist eine Fehlfunktion ausgeschlossen, da beim Ansetzen des in den Werkzeughalter eingespannten Werkzeugs an die Bearbeitungsstelle der Werkzeughalter über die auf das Werkzeug ausgeübte Andruckkraft aus der Montageposition in die Verriegelungsposition verschoben und hier von der Verriegelungsvorrichtung automatisch verriegelt wird.

Die axiale Bedienrichtung des Werkzeughalters und der Verriegelungsvorrichtung beim Wechsel des Werkzeughalters ist ergonomisch optimal. Das Entriegeln des Werkzeughalters durch eine Verschiebebewegung in Richtung des Bedieners ist gut verständlich und erleichtert die Handhabung. Darüber hinaus sind bei abgenommenem Werkzeughalter die am Führungsrohr angeordneten Bauteile der Verriegelungsvorrichtung leicht montierbar und im Falle eine Reparatur oder des Recycelns auch wieder gut demontierbar.

Durch die in den weiteren Ansprüchen aufgeführten Maßnahmen sind vorteilhafte Weiterbildungen und Verbesserungen der im Anspruch 1 angegebenen Handwerkzeugmaschine möglich.

Die Verschiebemittel zum Verbringen des Werkzeughalters aus der Verriegelungsposition in die Montageposition mit Lösen der Verriegelungsvorrichtung weisen gemäß einer vorteilhaften Ausführungsform der Erfindung eine vorgespannte Feder auf, die sich einerseits am Werkzeughalter und andererseits am Führungsrohr abstützt.

### Zeichnung

Die Erfindung ist anhand von in der Zeichnung dargestellten Ausführungsbeispielen in der nachfolgenden Beschreibung näher erläutert. Es zeigen:

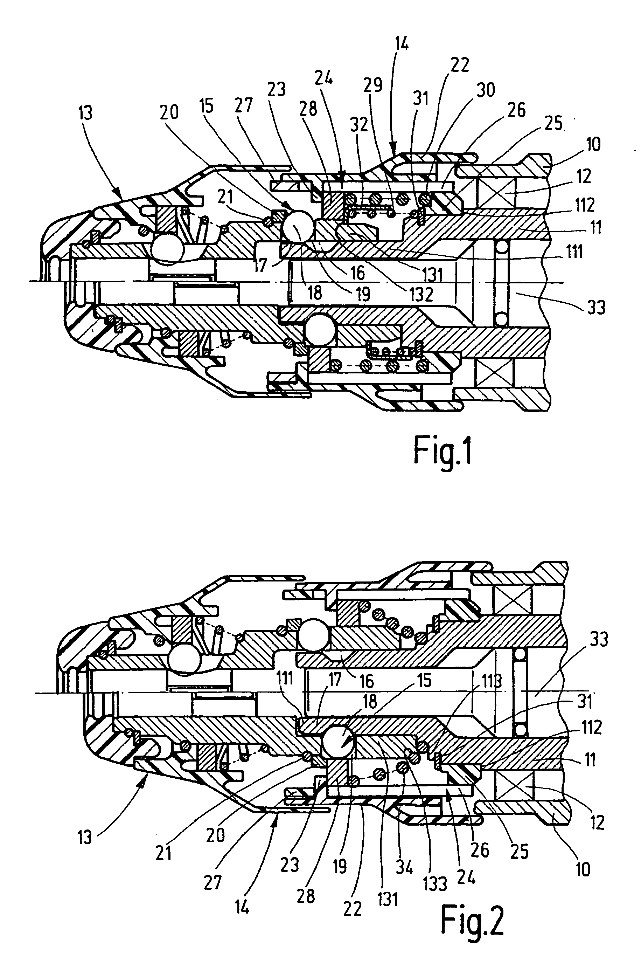

- Fig. 1 und 2: jeweils ausschnittweise einen Bohrhammer mit angesetztem Werkzeughalter im Halbschnitt gemäß einem ersten und zweiten Ausführungsbeispiel, wobei der Werkzeughalter in der oberen Schnitthälfte in seiner Montageposition und in der unteren Schnitthälfte in seiner Verriegelungsposition dargestellt ist.

Der in Fig. 1 ausschnittweise im Längsschnitt dargestellte Bohrhammer als Ausführungsbeispiel für eine allgemeine Handwerkzeugmaschine weist ein Maschinengehäuse 10 auf, in dem ein Führungsrohr 11 mittels Radiallager 12 drehbar angeordnet ist. Das Führungsrohr 11 ist im vorderen, aus dem Maschinengehäuse 10 vorstehenden Endbereich 111 im Durchmesser reduziert, der zum Aufnehmen eines Werkzeughalters 13 dient. Der Werkzeughalter 13 ist an sich bekannt und kann beispielsweise zur Aufnahme eines sog. SDS plus-Werkzeugs ausgebildet sein. Ein solches Werkzeug und ein Werkzeughalter zum Einspannen dieses Werkzeugs ist in der DE 25 51 125 C2 beschrieben, so dass hier nicht näher darauf eingegangen wird.

Im Führungsrohr 11 ist ein Schlagkolben oder Döpper 33 eines hier nicht dargestellten Schlagwerks axial verschieblich geführt, der von einem hin- und hergehenden Antriebskolben beaufschlagt wird und seine Schlagenergie auf das begrenzt axial verschieblich im Werkzeughalter 13 eingespannte Werkzeug überträgt. Am Führungsrohr 11 greift außerdem noch ein Drehantrieb an, der das Führungsrohr 11 in Rotation zu versetzen vermag. Ein Ausführungsbeispiel für einen Drehantrieb und ein Schlagwerk ist in der DE 28 20 128 A1 beschrieben.

Der Werkzeughalter 13 ist auf dem Führungsrohr 11 wechselbar aufgesetzt und mittels einer Verriegelungsvorrichtung 14 in seiner Verriegelungsposition auf dem Führungsrohr 11 axial im wesentlichen unverschieblich und drehfest festgelegt. Die Verriegelungsposition des Werkzeughalters 13 ist in der unteren Schnitthälfte der Fig. 1 dargestellt. Gewechselt wird der Werkzeughalter 13 bei Verschleiß oder bei Austausch eines Werkzeughalters 13 z.B. für ein SDS plus-Werkzeug gegen einen anderen Werkzeughalter 13 z.B. für einen normalen Bohrer.

Um das Wechseln des Werkzeughalters 13 ergonomisch zu gestalten und insbesondere eine einhändige Bedienung beim Wechselvorgang zu ermöglichen ist auf dem Führungsrohr 11 eine Montageposition für den Werkzeughalter 13 vorgesehen, in der der Werkzeughalter 13 unverriegelt auf dem Führungsrohr 11 sitzt und gegen Abfallen gehalten ist. In diese Montageposition wird der Werkzeughalter 13 bei Lösen der Verriegelungsvorrichtung 14 automatisch durch dann wirksam werdende Verschiebemittel verbracht. Hierzu trägt der Werkzeughalter 13 in seinem den Endbereich 111 des Führungsrohrs 11 übergreifenden, im Durchmesser vergrößerten Endabschnitt 131 mindestens einen Verriegelungskörper 15, und im Endbereich 111 des Führungsrohrs 11 ist mindestens eine Tasche 16 vorgesehen, in die der Verriegelungskörper 15 in der Verriegelungsposition des Werkzeughalters 13 eintaucht und dadurch eine drehfeste und axial unverschiebliche Verbindung zwischen dem Führungsrohr 11 und dem Werkzeughalter 13 herstellt. Für die Montageposition des Werkzeughalters 13 ist auf dem Führungsrohr 11 mindestens eine Einwölbung 17 eingearbeitet, in die der Verriegelungskörper 15 mit geringer radialer Anpresskraft einzufallen vermag. Die Einwölbung 17 ist in Aufschieberichtung des Werkzeughalters 13 auf das Führungsrohr 11 der Tasche 16 axial unmittelbar vorgelagert. In einer bevorzugten Ausführungsform sind jeweils mehrere, beispielsweise vier, um gleiche Drehwinkel zueinander versetzt angeordnete Verriegelungsköper 15, Taschen 16 und Einwölbungen 17 vorgesehen. Die Verriegelungskörper 15 sind in Wanddurchbrüchen des Endabschnitts 131 des Werkzeughalters 13 axial unverschieblich aufgenommen und gegen radiales Herausfallen nach außen gesichert. In dem beschriebenen Ausführungsbeispiel sind die Verriegelungskörper 15 als Kugeln 18 und die Taschen 16 als Radialbohrungen ausgeführt. Das radiale Herausfallen der Kugeln 18 aus dem Radialbohrungen 19 ist durch eine Ringscheibe 20 verhindert, die mittels eines Sicherungsrings 21 auf dem Endabschnitt 131 des Werkzeughalters 13 festgelegt ist und sich an die Kugeln 18 so anlegt, dass diese in den Radialbohrungen 19 ein gewisses Radialspiel besitzen. Die Einwölbungen 17 sind in ihrer Kontur den Kugeln 18 angepasst, und in der Montagestellung liegen die Kugeln 18 mit wenig Vorspannung durch die Ringscheibe 20 in den Einwölbungen 17 ein.

Die Verriegelungsvorrichtung 14 ist am Führungsrohr 11 festgelegt und weist u. a. eine Schiebehülse 22 auf, die einen radial nach innen vorspringenden Ringsteg 23 trägt. Die Schiebehülse 22 ist auf einem am Führungsrohr 11 befestigten Führungselement 24 axial verschieblich geführt und übergreift mit ihrem dem Maschinengehäuse 10 zugekehrten Ende das Maschinengehäuse 10. Das Führungselement 24 ist als einstückiges Kunststoffspritzteil gefertigt und weist eine auf dem Führungsrohr 11 axial unverschieblich festgelegten Ring 25 und eine Mehrzahl vom Ring 25 axial abstehender Arme 26 auf, die an ihrem freien Ende jeweils einen in Umfangsrichtung vorspringenden Rasthaken 27 tragen. Die Rasthaken 27 bilden einen vorderen Anschlag für den Verschiebeweg der Schiebehülse 22. Der Ringsteg 23 der Schiebehülse 22 übergreift radial einen Sperring 28 der Verriegelungsvorrichtung 14, der außen von den Armen 26 des Führungselements 24 axial verschieblich geführt ist. Zwischen dem Sperring 28 und dem Ring 25 des Führungselements 24 stützt sich eine Schraubendruckfeder 30 ab, die den Sperring 28 gegen den Ringsteg 23 der Schiebehülse 22 anlegt, so dass wiederum der Ringsteg 23 gegen die Rasthaken 27 gedrückt wird. In dieser Verriegelungsposition der Verriegelungsvorrichtung 14 liegt der Sperring 28 auf den Erriegelungskörpern 15 bzw. den Kugeln 18 auf, die in die Taschen 16 im Führungsrohr 11 eingetaucht sind und verhindert jegliche radiale Verschiebung der Verriegelungskörper 15 bzw. der Kugeln 18.

In der Verriegelungsvorrichtung 14 sind Verschiebemittel integriert, welche mit Lösen der Verriegelungsvorrichtung 14 automatisch aktiviert werden und den Werkzeughalter 13 in die Montageposition verschieben, in welcher dann die Verriegelungskörper 15 bzw. Kugeln 18 in die Einwölbungen 17 eingreifen. Im Ausführungsbeispiel der Fig. 1 weisen diese Mittel eine zylindrische Druckfeder 29 auf, die sich am Sperring 28 und am Führungsrohr 11 abstützt. Das eine Widerlager der Druckfeder 29 am Führungsrohr 11 wird von einer Sicherungsscheibe 31, die in einer in das Führungsrohr 11 eingearbeiteten Ringnut einliegt und den Ring 25 des Führungselements 24 gegen eine im Führungsrohr 11 ausgebildete Radialschulter verspannt, und das andere Widerlager der Druckfeder 29 von dem Topfboden eines Federtopfes 32 gebildet, der mit einer zentralen Öffnung den Endabschnitt 131 des Werkzeughalters 13 übergreift und an einer im Endabschnitt 131 ausgebildeten Radialschulter 132 anliegt.

### Die Montage und Demontage des Werkzeughalters 13 erfolgt wie folgt:

Zur Montage wird der Werkzeughalter 13 mit seinem Endabschnitt 131 auf den Endbereich 111 des Führungsrohrs 11 aufgeschoben, bis die Kugeln 18 in Montageposition des Werkzeughalters 13 in den Einwölbungen 17 liegen. Durch weiteres Verschieben in Richtung Maschinengehäuse 10 stoßen die Kugeln 18 an den Sperring 28 an, der so weit zurückgeschoben wird, bis die Kugeln 18 in der Verrieglungsposition des Werkzeughalters 13 in die Taschen 16 eintauchen. In diesem Moment wird der Sperring 28 von der Schraubendruckfeder 30 wieder nach vorn zur Anlage an dem Ringsteg 23 der Schiebehülse 22 verschoben. In dieser Verriegelungsposition liegt der Sperring 28 auf den Kugeln 18 auf und blockiert deren Radialverschiebung, so dass die Kugeln 18 nicht aus den Taschen 16 austauchen können und die Verriegelung zwischen Führungsrohr 11 und Werkzeughalter 13 zuverlässig erhalten bleibt (untere Schnitthälfte in Fig. 1). Die Verriegelung wird bei der Montage also durch einfaches, einhändiges Aufschieben des Werkzeughalters 13 auf das Führungsrohr 11 automatisch herbeigeführt. Die Maschine kann mit der anderen Hand gehalten werden.

Zur Demontage wird die Schiebehülse 22 in Richtung Maschinengehäuse 10 nach hinten verschoben. Der Ringsteg 23 an der Schiebehülse 22 nimmt dabei den Sperring 28 mit, wie dies in der oberen Schnitthälfte der Fig. 1 dargestellt ist. Durch das Verschieben des Sperrrings 28 werden einerseits die Kugeln 18 freigegeben und andererseits die Druckfeder 29 und die Schraubendruckfeder 30 gespannt. Wird nunmehr die Schiebehülse 22 freigegeben, so schiebt die Druckfeder 29 den Werkzeughalter 13 in Fig. 1 nach links, wobei die Kugeln 18 aus den Taschen 16 in Folge der nunmehr gegebenen radialen Verschiebbarkeit austreten und in die Einwölbungen 17 in der Montageposition einfallen. Die Druckfeder 29 ist so ausgelegt, dass die Kugeln 18 nicht durch Federkraft aus den Einwölbungen 17 ausgeschoben werden. Die sich ebenfalls entspannende schraubende Druckfeder 30 drückt den Sperring 28 und die Schiebehülse 22 bis zum Anschlag des Ringstegs 23 der Schiebehülse 22 an den Rasthaken 27 des Führungselements 24. Der Werkzeughalter 13 liegt nunmehr entriegelt zur Abnahme von dem Führungsrohr 11 bereit. Schiebt der Bedienende den Werkzeughalter 13 wieder in Fig. 1 nach rechts, so wird der Werkzeughalter 13 wieder wie vorstehend beschrieben automatisch verriegelt. Zieht der Bedienende den Werkzeughalter 13 in Fig. 1 nach links so wird der Werkzeughalter 13 vom Führungsrohr 11 abgezogen. Das Betätigen der Schiebehülse 22 und das Abziehen des Werkzeughalters 13 aus seiner Montageposition erfolgt nacheinander mit der gleichen Hand, während die andere Hand die Maschine hält. Die Demontage des Werkzeughalters 13 kann also wiederum einhändig durchgeführt werden.

Bei dem in Fig. 2 ausschnittweise dargestellten Ausführungsbeispiel des Bohrhammers mit Werkzeughalter 13 ist die Verriegelungsvorrichtung 14 insoweit abgewandelt, als die getrennte Funktion der beiden Druckfedern 29 und 30 in der Verriegelungsvorrichtung 14 gemäß Fig. 1 von einer einzigen Kegelfeder 34 übernommen wird. Das Stirnende des den Endbereich 111 des Führungsrohrs 11 übergreifenden Endabschnitts 131 des Werkzeughalters 13 ist mit einem Konus 133 versehen. Die Kegelfeder 34 liegt mit ihrem durchmessergrößeren Federende am Sperring 28 und mit ihrem durchmesserkleinerem Ende an einer im Führungsrohr 11 ausgebildeten weiteren Radialschulter 113 an. Konus 133 und Kegelfeder 34 sind so aufeinander abgestimmt, dass in der in Fig. 2 in der unteren Schnitthälfte dargestellten Verriegelungsposition des Werkzeughalters 13 die Kegelfeder 34 durch den Konus 133 nach außen ausbauchend vorgespannt ist. Beim Zurückziehen der Schiebehülse 22 zum Zwecke des Lösens der Verriegelungsvorrichtung 14 wird die Kegelfeder 34 vom Konus 133 gelöst, wie dies in der oberen Schnitthälfte der Fig. 2 zu sehen ist. Beim Loslassen der zurückgezogenen Schiebehülse 22 entspannt sich die Kegelfeder 34 und schiebt nicht nur den Sperring 28 und die Schiebehülse 22 bis zum Anschlag an die Rasthaken 27 des Führungselements 24, sondern die Windungen der Kegelfeder 34 streifen auch den Konus 133 und schieben den Werkzeughalter 13 nach vorn in dessen verriegelungsfreie Montageposition, in welcher die Verriegelungskörper 15 bzw. Kugeln 18 in den Einwölbungen 17 auf dem Endbereich 111 des Führungsrohrs 11 einliegen. Im übrigen ist Aufbau und Funktion der Verriegelungsvorrichtung 14 zum Werkzeughalterwechsel identisch wie zu Fig. 1 beschrieben, so dass gleiche Bauteile mit gleichen Bezugszeichen versehen sind und die Beschreibung der Fig. 1 in gleicher Weise auf Fig. 2 zutrifft. Der Werkzeughalter 13 ist in der oberen Schnitthälfte der Fig. 2 wiederum in seiner entriegelten Montageposition und in der unteren Schnitthälfte der Fig. 2 in seiner Verriegelungsposition dargestellt.

## Patentansprüche

1. Handwerkzeugmaschine, insbesondere Schlag- oder Bohrhammer, mit einem wechselbaren Werkzeughalter (13), einem den Werkzeughalter (13) auf seinem freien Ende (111) aufnehmenden Führungsrohr (11) und mit einer am Führungsrohr (11) angeordneten, manuell zu bedienenden Verriegelungsvorrichtung (14) zum Festlegen des Werkzeughalters (13) am Führungsrohr (11) in einer vom Werkzeughalter (13) auf dem Führungsrohr (11) eingenommenen, definierten Verriegelungsposition, wobei der Verriegelungsposition eine Montageposition in Aufschieberichtung des Werkzeughalters (13) vorgeordnet ist, in der der Werkzeughalter (13) unverriegelt auf dem Führungsrohr (11) gehalten ist, und dass die Verriegelungsvorrichtung (14) mit ihrem Lösen aktivierbare Mittel zum Verschieben des Werkzeughalters (13) in die Montageposition aufweist, wobei der Werkzeughalter (13) in seinem das Führungsrohr (11) übergreifenden Endabschnitt (131) mindestens einen radial verschieblichen und axial unverschieblichen Verriegelungskörper (15) trägt und wobei am Führungsrohr (11) in der Verriegelungsposition des Werkzeughalters (13) mindestens eine, den Verriegelungskörper (15) axial unverschieblich aufnehmende Tasche (16) vorgesehen ist, **dadurch gekennzeichnet, dass** am Führungsrohr (11) in der Montageposition des Werkzeughalters (13) mindestens eine, der Tasche (16) axial vorgelagerte, den Verriegelungskörper (15) aufnehmende Einwölbung (17) vorgesehen ist.

2. Handwerkzeugmaschine nach Anspruch 1, **dadurch gekennzeichnet, dass** der mindestens eine Verriegelungskörper (15) in einem im Endabschnitt (131) des Werkzeughalters (13) vorgehaltenen Durchbruch aufgenommen und gegen Austreten aus dem Durchbruch gesichert ist.

3. Handwerkzeugmaschine nach einem der Ansprüche 1-2, **dadurch gekennzeichnet, dass** die Verschiebemittel eine in der Verriegelungsposition vorgespannte Feder (30; 34) aufweisen, die sich einerseits am Werkzeughalter (13) und andererseits am Führungsrohr (11) abstützt.

4. Handwerkzeugmaschine nach einem der Ansprüche 1-3, **dadurch gekennzeichnet, dass** die Verriegelungsvorrichtung (14) einen Verriegelungsring (28), der in der Verriegelungsposition eine. Radialverschiebung des mindestens einen Verriegelungskörpers (15) blockiert, und eine mit dem Verriegelungsring (28) gekoppelte, manuell betätigbare Schiebehülse (22) aufweist.

5. Handwerkzeugmaschine nach Anspruch 4, **dadurch gekennzeichnet, dass** die Schiebehülse (22) einen den Verriegelungsring (28) übergreifenden Ringsteg (23) aufweist, der bei unbetätigter Schiebehülse (22) durch eine den Verriegelungsring (28) beaufschlagende Federkraft an einem Axialanschlag (27) anliegt und durch Verschieben der Schiebehülse (22) den Verriegelungsring (28) gegen die Federkraft mitnimmt.

6. Handwerkzeugmaschine nach Anspruch 5, **dadurch gekennzeichnet, dass** der axiale Anschlag (27) an einem die Schiebehülse (22) führenden Führungselement (24) ausgebildet ist, das auf dem Führungsrohr (11) befestigt ist.

7. Handwerkzeugmaschine nach Anspruch 6, **dadurch gekennzeichnet, dass** das vorzugsweise als Kunststoffspritzteil gefertigte Führungselement (24) einen auf dem Führungsrohr (11) axial unverschieblich festgelegten Ring (25) und eine Mehrzahl vom Ring (25) axial abstehender Arme (26) aufweist, die an ihrem freien Ende jeweils einen Rasthaken (27) tragen, und dass der Anschlag für den Ringsteg (23) der Schiebehülse (22) von den Rasthaken (27) gebildet ist.

8. Handwerkzeugmaschine nach Anspruch 7, **dadurch gekennzeichnet, dass** die am Werkzeughalter (13) angreifende Feder als zylindrische Druckfeder (29) ausgebildet ist, die sich an einer am Führungsrohr (11) gehaltenen Sicherungsscheibe (31) und an einem eine zentrale Öffnung aufweisenden Boden eines Federtopfes (32) abstützt, der seinerseits an einer am Werkzeughalter (13) ausgebildeten Radialschulter (132) anliegt, und dass die den Verriegelungsring (28) beaufschlagende Federkraft von einer Schraubendruckfeder (30) abgeleitet ist, die sich am Ring (25) des Führungselements (24) und am Verriegelungsring (28) abstützt.

9. Handwerkzeugmaschine nach Anspruch 5, **dadurch gekennzeichnet, dass** der Werkzeughalter (13) an seinem dem Führungsrohr (11) zugekehrten freien Ende einen Konus (133) trägt, dass die am Werkzeughalter (13) angreifende Feder als Kegelfeder (34) ausgebildet ist, die mit ihrem durchmessergrößeren Federende an dem Ringsteg (23) der Schiebehülse (22) und mit ihrem durchmesserkleineren Federende an dem Führungsrohr (11) anliegt, und dass der Konus (133) und die Federform der Kegelfeder (34) so aufeinander abgestimmt sind, dass in der Verriegelungsposition die Kegelfeder (34) durch den Konus (133) nach außen ausbauchend vorgespannt ist.

10. Handwerkzeugmaschine nach einem der Ansprüche 2-9, **dadurch gekennzeichnet, dass** der mindestens eine Verriegelungskörper (15) als Kugel (18) und der mindestens eine Durchbruch im Endabschnitt (131) des Werkzeughalters (13) als Radialbohrung (19) ausgebildet ist und dass die Kugel (18) mittels einer auf dem Werkzeughalter (13) festgelegten Ringscheibe (20) in der Radialbohrung (19) mit axialem Spiel fixiert ist.

11. Handwerkzeugmaschine nach einem der Ansprüche 1-10, **dadurch gekennzeichnet, dass** das Führungsrohr (11) in einem Maschinengehäuse (10) , vorzugsweise drehbar gelagert, aufgenommen ist und endseitig aus dem Maschinengehäuse (10) vorsteht und dass die Schiebehülse (22) das freie Ende des Maschinengehäuses (10) übergreift.

12. Handwerkzeugmaschine nach einem der Ansprüche 1-10, **dadurch gekennzeichnet, dass** mehrere Verriegelungskörper (15) und Durchbrüche im Endabschnitt (131) des Werkzeughalters (13), die um vorzugsweise gleiche Drehwinkel gegeneinander versetzt sind, und eine gleiche Anzahl von Taschen (16) und den Taschen (16) axial vorgelagerte Einwölbungen (17) im Endbereich (111) des Führungsrohrs (11) vorgesehen sind, die wiederum um die gleichen Drehwinkel gegeneinander versetzt sind.

## Claims

1. Portable power tool, in particular a percussion or rotary hammer, having an exchangeable tool holder (13), a guide tube (11) that receives the tool holder (13) on its free end (111), and having a manually operated locking device (14), which is arranged on the guide tube (11), for fixing the tool holder (13) on the guide tube (11) in a defined locking position assumed by the tool holder (13) on the guide tube (11), wherein a fitting position is arranged in front of the locking position in the push-on direction of the tool holder (13), the tool holder (13) being held in an unlocked manner on the guide tube (11) in said fitting position, and wherein the locking device (14) has means, which can be activated by the disengagement thereof, for moving the tool holder (13) into the fitting position, wherein the tool holder (13) carries in its end portion (131) that engages over the guide tube (11) at least one radially movable and axially immovable locking body (15) and wherein at least one pocket (16) which receives the locking body (15) in an axially immovable manner is provided on the guide tube (11) in the locking position of the tool holder (13), **characterized in that** at least one concavity (17) that is located axially in front of the pocket (16) and receives the locking body (15) is provided on the guide tube (11) in the fitting position of the tool holder (13).

2. Portable power tool according to Claim 1, **characterized in that** the at least one locking body (15) is received in a cutout provided in the end portion (131) of the tool holder (13) and is secured against escaping from the cutout.

3. Portable power tool according to either of Claims 1-2, **characterized in that** the movement means have a spring (30; 34) which is prestressed in the locking position and is supported at one end on the tool holder (13) and at the other end on the guide tube (11).

4. Portable power tool according to one of Claims 1-3, **characterized in that** the locking device (14) has a locking ring (28), which in the locking position blocks a radial movement of the at least one locking body (15), and a manually actuable sliding sleeve (22) coupled to the locking ring (28).

5. Portable power tool according to Claim 4, **characterized in that** the sliding sleeve (22) has an annular web (23) which engages over the locking ring (28), rests, when the sliding sleeve (22) is not actuated, against an axial stop (27) by way of a spring force acting on the locking ring (28) and carries along the locking ring (28) counter to the spring force by movement of the sliding sleeve (22).

6. Portable power tool according to Claim 5, **characterized in that** the axial stop (27) is formed on a guide element (24) which guides the sliding sleeve (22) and is secured to the guide tube (11).

7. Portable power tool according to Claim 6, **characterized in that** the guide element (24), which is produced preferably as an injection-moulded plastic part, has a ring (25), which is fixed in an axially immovable manner on the guide tube (11), and a plurality of arms (26), which project axially from the ring (25) and carry at their free ends a respective latching hook (27), and **in that** the stop for the annular web (23) of the sliding sleeve (22) is formed by the latching hooks (27).

8. Portable power tool according to Claim 7, **characterized in that** the spring that acts on the tool holder (13) is formed as a cylindrical compression spring (29) which is supported on a lock washer (31) held on the guide tube (11) and on a bottom, which has a central opening, of a spring pot (32) which for its part rests against a radial shoulder (132) formed on the tool holder (13), and **in that** the spring force acting on the locking ring (28) is derived from a helical compression spring (30) which is supported on the ring (25) of the guide element (24) and on the locking ring (28).

9. Portable power tool according to Claim 5, **characterized in that** the tool holder (13) carries a cone (133) at its free end facing the guide tube (11), **in that** the spring acting on the tool holder (13) is formed as a conical spring (34), the end of which with the larger diameter rests against the annular web (23) of the sliding sleeve (22) and the end of which with the smaller diameter rests against the guide tube (11), and **in that** the cone (133) and the shape of the conical spring (34) are matched to one another such that in the locking position the conical spring (34) is prestressed by the cone (133) such that it bulges outwards.

10. Portable power tool according to one of Claims 2-9, **characterized in that** the at least one locking body (15) is in the form of a sphere (18) and the at least one cutout in the end portion (131) of the tool holder (13) is in the form of a radial hole (19), and **in that** the sphere (18) is fixed with axial play in the radial hole (19) by means of an annular washer (20) fixed on the tool holder (13).

11. Portable power tool according to one of Claims 1-10, **characterized in that** the guide tube (11) is received, preferably mounted in a rotatable manner, in a machine housing (10) and its end protrudes from the machine housing (10), and **in that** the sliding sleeve (22) engages over the free end of the machine housing (10).

12. Portable power tool according to one of Claims 1-10, **characterized in that** a plurality of locking bodies (15) and cutouts, which are offset with respect to one another by preferably the same angle of rotation, are provided in the end portion (131) of the tool holder (131), and an equal number of pockets (16) and concavities (17) arranged axially in front of the pockets (16) are provided in the end region (111) of the guide tube (11), said pockets (16) and concavities (17) in turn being offset with respect to one another by the same angle of rotation.

## Revendications

1. Machine-outil à main, notamment marteau percuteur ou perforateur, comprenant un porte-outil interchangeable (13), un tube de guidage (11) recevant le porte-outil (13) sur son extrémité libre (111) et un dispositif de verrouillage (14) à commande manuelle disposé sur le tube de guidage (11), pour fixer le porte-outil (13) sur le tube de guidage (11) dans une position de verrouillage définie adopté par le porte-outil (13) sur le tube de guidage (11), la position de verrouillage étant précédée d'une position de montage dans la direction d'enfoncement du porte-outil (13), dans laquelle position de montage le porte-outil (13) est maintenu de manière déverrouillée sur le tube de guidage (11), et le dispositif de verrouillage (14) présentant des moyens pouvant être activés avec son desserrage pour déplacer le porte-outil (13) dans la position de montage, le porte-outil (13) portant dans sa portion d'extrémité (131) venant en prise par le dessus avec le tube de guidage (11) au moins un corps de verrouillage (15) déplaçable radialement et immobile axialement, et au moins une cavité (16) recevant le corps de verrouillage (15) de manière immobile axialement étant prévue sur le tube de guidage (11) dans la position de verrouillage du porte-outil (13), **caractérisée en ce qu'**au moins une concavité (17) montée axialement avant la cavité (16), recevant le corps de verrouillage (15), est prévue sur le tube de guidage (11) dans la position de montage du porte-outil (13).

2. Machine-outil à main selon la revendication 1, **caractérisée en ce que** l'au moins un corps de verrouillage (15) est reçu dans un orifice réalisé dans la portion d'extrémité (131) du porte-outil (13) et y est fixé de manière à ne pas pouvoir ressortir de l'orifice.

3. Machine-outil à main selon l'une quelconque des revendications 1 à 2, **caractérisée en ce que** les moyens de coulissement présentent un ressort (30 ; 34) précontraint dans la position de verrouillage, qui s'appuie d'une part sur le porte-outil (13) et d'autre part sur le tube de guidage (11).

4. Machine-outil à main selon l'une quelconque des revendications 1 à 3, **caractérisée en ce que** le dispositif de verrouillage (14) présente une bague de verrouillage (28), qui, dans la position de verrouillage, bloque un coulissement radial de l'au moins un corps de verrouillage (15), et un manchon coulissant (22) à commande manuelle, accouplé à la bague de verrouillage (28).

5. Machine-outil à main selon la revendication 4, **caractérisée en ce que** le manchon coulissant (22) présente une nervure annulaire (23) venant en prise par le dessus avec la bague de verrouillage (28), qui, lorsque le manchon coulissant (22) n'est pas actionné, s'applique sous l'effet d'une force de ressort sollicitant la bague de verrouillage (28) contre une butée axiale (27) et entraîne la bague de verrouillage (28) à l'encontre de la force de ressort par coulissement du manchon coulissant (22).

6. Machine-outil à main selon la revendication 5, **caractérisée en ce que** la butée axiale (27) est fixée sur un élément de guidage (24) guidant le manchon coulissant (22), qui est fixé sur le tube de guidage (11).

7. Machine-outil à main selon la revendication 6, **caractérisée en ce que** l'élément de guidage (24) fabriqué de préférence sous forme de pièce moulée par injection de plastique présente une bague (25) fixée de manière immobile axialement sur le tube de guidage (11) et une pluralité de bras (26) saillant axialement depuis la bague (25), qui portent sur leur extrémité libre à chaque fois un crochet d'encliquetage (27), et **en ce que** la butée pour la nervure annulaire (23) du manchon coulissant (22) est formée par le crochet d'encliquetage (27).

8. Machine-outil à main selon la revendication 7, **caractérisée en ce que** le ressort venant en prise sur le porte-outil (13) est réalisé sous forme de ressort de compression cylindrique (29), qui s'appuie sur une rondelle de fixation (31) maintenue sur le tube de guidage (11), et sur un fond d'un pot de ressort (32) présentant une ouverture centrale, lequel pot de ressort s'applique pour sa part contre un épaulement radial (132) réalisé sur le porte-outil (13), et **en ce que** la force de ressort sollicitant la bague de verrouillage (28) est dérivée d'un ressort de compression à boudin (30) qui s'appuie sur la bague (25) de l'élément de guidage (24) et sur la bague de verrouillage (28).

9. Machine-outil à main selon la revendication 5, **caractérisée en ce que** le porte-outil (13) porte sur son extrémité libre tournée vers le tube de guidage (11) un cône (133), **en ce que** le ressort venant en prise sur le porte-outil (13) est réalisé sous forme de ressort conique (34) qui s'applique avec son extrémité de ressort de plus grand diamètre contre la nervure annulaire (23) du manchon coulissant (22) et avec son extrémité de ressort de plus petit diamètre contre le tube de guidage (11), et **en ce que** le cône (133) et la forme de ressort du ressort conique (34) sont adaptés l'un à l'autre de telle sorte que dans la position de verrouillage, le ressort conique (34) soit précontraint par le cône (133) de manière bombée vers l'extérieur.

10. Machine-outil à main selon l'une quelconque des revendications 2 à 9, **caractérisée en ce que** l'au moins un corps de verrouillage (15) est réalisé sous forme de bille (18) et l'au moins un orifice dans la portion d'extrémité (131) du porte-outil (13) est réalisé sous forme d'alésage radial (19) et **en ce que** la bille (18) est fixée au moyen d'une rondelle annulaire (20) fixée sur le porte-outil (13) dans l'alésage radial (19) avec un jeu axial.

11. Machine-outil à main selon l'une quelconque des revendications 1 à 10, **caractérisée en ce que** le tube de guidage (11) est reçu dans un boîtier de machine (10), de préférence de manière supportée à rotation, et fait saillie du côté de l'extrémité hors du boîtier de machine (10) et **en ce que** le manchon coulissant (22) vient en prise par le dessus avec l'extrémité libre du boîtier de machine (10).

12. Machine-outil à main selon l'une quelconque des revendications 1 à 10, **caractérisée en ce que** plusieurs corps de verrouillage (15) et orifices dans la portion d'extrémité (131) du porte-outil (13), qui sont décalés les uns par rapport aux autres de préférence du même angle de rotation, et une même pluralité de cavités (16) et de concavités (17) montées axialement avant les cavités (16) sont prévues dans la région d'extrémité (111) du tube de guidage (11), lesquelles sont à leur tour décalées les unes par rapport aux autres du même angle de rotation.
